(19) Europäisches Patentamt
European Patent Office
Office européen des brevets

(11) Publication number: **0 278 543 B1**

(12) **EUROPEAN PATENT SPECIFICATION**

(45) Date of publication of patent specification: **23.09.92**

(51) Int. Cl.[5]: **C23F 11/12**, C23F 11/14, //C07C49/794,C07D215/10

(21) Application number: **88200060.7**

(22) Date of filing: **15.01.88**

# (54) Process and composition for inhibiting high-temperature iron and steel corrosion.

(30) Priority: **12.02.87 US 13603**

(43) Date of publication of application:
**17.08.88 Bulletin 88/33**

(45) Publication of the grant of the patent:
**23.09.92 Bulletin 92/39**

(84) Designated Contracting States:
**DE FR GB IT NL**

(56) References cited:
**EP-A- 0 212 752**

**Werkstoffe u. Korrosion, edition 36, 1985, VCH Verlag Chemie, G.Schmitt u. K.Bedbur"Investigations on structural and electonic effects in acid inhibitors by AC impedeance" pages 273-278**

**Patent Abstracts of Japan, unexamin. applic., C section, vol. 3, no. 87, July 25, 1979, The Patent Office Japanese Government page 167 C 53**

(73) Proprietor: **PUMPTECH N.V.**
**Atlantic House Noorderlaan 147 Bus 5C**
**B-2030 Antwerpen(BE)**
(84) Designated Contracting States:
**DE GB IT NL**

(73) Proprietor: **COMPAGNIE DES SERVICES DOWELL SCHLUMBERGER**
**20, rue Jean-Jaurès**
**F-92800 Puteaux(FR)**
(84) Designated Contracting States:
**FR**

(72) Inventor: **Frenier, Wayne W.**
**7514 South 68th East Place**
**Tulsa Oklahoma 74133(US)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 278 543 B1

## Description

### CROSS-REFERENCE TO RELATED APPLICATION

This invention is related to the subject matter of our prior application, Serial No. 06/765,890 filed August 14th, 1985, corresponding to EP-A-0 212 752 the entire specification of which is incorporated by reference.

### BACKGROUND OF THE INVENTION

#### Field of the Invention

The present invention relates to new and useful acid-corrosion inhibitor compositions, and a process of using them. More particularly, the present invention concerns novel compositions of matter which reduce the attack of aqueous acid solutions on ferrous metals at high temperatures, and a process of using them.

#### Technology Review

In the exploration and recovery of oil from underground fields, it is common to "acidize" both new and producing wells with aqueous solutions of strong acids. Various inhibitors for preventing the attack of acids on ferrous metals have been proposed. Of the many inhibitors especially designed to prevent acid attack on the well casings, very few provide satisfactory Protection at high temperatures. Arsenic and/or various arsenic compounds were used as corrosion inhibitors, despite their toxic effect. The toxic nature of arsenic and its compounds, and their adverse effect on catalysts used in petroleum refineries, have caused an extensive search for new corrosion inhibitors.

U.S. Patent 4,028,268 discloses specific high-temperature corrosion inhibitors comprising a quaternized derivative of quinoline and a halomethylated polycyclic compound, an acetylenic alcohol, a surface active agent, and a formic acid derivative. Inhibitors prepared from quinoline and aliphatic and single-ring aromatic compounds are surprisingly less effective (col. 9, lines 11 to 18).

U.S. Patent 3,658,720 discloses corrosion inhibitors comprising at least two acetylenic alcohols, a quinoline quaternary compound, and an organic fluoride, which cooperate to reduce the corrosivity of corrosive acids.

Schmitt and Bedbur disclose a study by AC impedance measurements of pyridinium and quinolinium derivatives in an investigation of structural and electronic effects in acid inhibitors. Werkstoffe und Korrosion, volume 36, pages 273-278 (1985).

It would be desirable to have a corrosion inhibitor which is useful in a broader number of situations. For example, highly concentrated hydrochloric acid is often employed in oil well stimulation treatment, but its use can lead to severe corrosion problems, especially at high temperatures. Thus, it would be desirable to have a corrosion inhibitor composition which could inhibit the acid corrosion of ferrous metals even in the presence of concentrated hydrocholoric acid at high temperatures and which is compatible with a variety of additives, for example, surfactants.

### SUMMARY OF THE INVENTION

The invention provides a composition and method for inhibiting the corrosion of iron and steel in the presence of aqueous acid at high temperatures, especially concentrated hydrochloric acid at temperatures above about 100 °C. The composition and method comprises adding to the acid an effective corrosion-inhibiting amount of an alkenylphenone and an N-substituted quinoline. The alkenylphenone has the following structure:

(I)

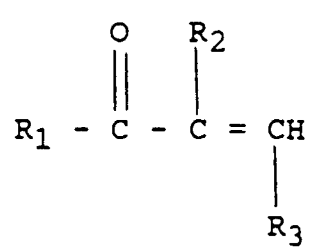

wherein $R_1$ may be unsubstituted or inertly substituted aryl of 6 to 10 carbons; and $R_2$ and $R_3$ may be the same or different and each be hydrogen, halogen, or an unsubstituted or inertly substituted aliphatic of 3 or more carbons. $R_2$ may also be hydroxyalkyl, alkoxyalkyl, or an unsubstituted or inertly substituted aryl of 6 or more carbons. The total number of carbon atoms in the compound (I) should not exceed 16. Inert substituents by definition have no adverse effect on the corrosion inhibition of the corresponding unsubstituted alkenyphenone, and include, for example, lower alkyl (one to four carbons), halo, an ether, alkoxy, or nitro. The compositions of the present invention are formed by admixing an alkenylphenone of structure (I) and an N-substituted quinoline (1-azanaphthalene). The composition and method of the invention are surprisingly effective in inhibiting the corrosion of iron and steel over a broad range of hydrochloric acid concentration at high temperatures.

It is an object of the invention to provide an improved composition for inhibiting iron and steel corrosion caused by a corrosive aqueous fluid, comprising an aqueous acid, an alkenylphenone of structure (I), and an N-substituted quinoline.

It is another object of the invention to provide an improved method for inhibiting iron and steel corrosion caused by a corrosive aqueous fluid, comprising mixing a compound which in aqueous acid forms an effective corrosion-inhibiting amount of an alkenylphenone of structure (I), and an N-substituted quinoline, together with said corrosive aqueous fluid.

It is an advantage of the invention that the improved composition is surprisingly effective in inhibiting the corrosion of iron and steel over a broad range of acid concentrations at high temperatures.

It is another advantage of the invention that the improved method for inhibiting corrosion is especially effective in highly concentrated aqueous acid solutions at high temperatures.

It is a feature of the invention that compounds with diverse structures will form, in aqueous acid, an alkenylphenone of the structure (I), which are admixed with a N-substituted quinoline.

It is another feature of the invention that compounds of the structure

(II)

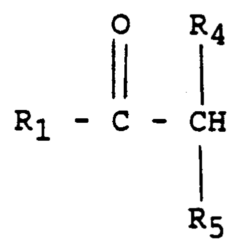

in aqueous acid form an alkenylphenone, which is admixed with a N-substituted quinoline. In compounds of structure (II), $R_4$ is an ether or alcohol of 1 to 8 carbon atoms in length; and $R_5$ is hydrogen, or an alkyl, alkenyl, alkynyl, cycloaliphatic or aryl group of 1 to 8 carbon atoms in length.

It is yet another feature of the invention that compounds of the structure

(III)

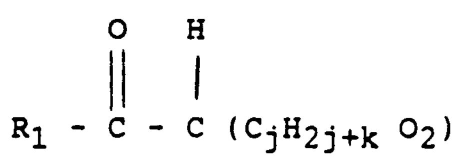

in aqueous acid form an alkenylphenone, which is admixed with an N-substituted quinoline. In compounds of structure (III), (j) is an integer from 2 to 8, and (k) is an integer from 0 to 2.

## DETAILED DESCRIPTION OF THE INVENTION

The corrosion inhibitors and compositions of the present invention may be formed in either of two ways: (a) the direct addition of an alkenylphenone to the corrosive aqueous fluid, together with an N-substituted quinoline; or (b) the addition of a precursor of an alkenylphenone which interacts with a corrosive aqueous acid fluid to form an alkenylphenone in the presence of an N-substituted quinoline. Examples of alkenylphenones include:

(i) 2-benzoyl-3-hydroxy-1-propene

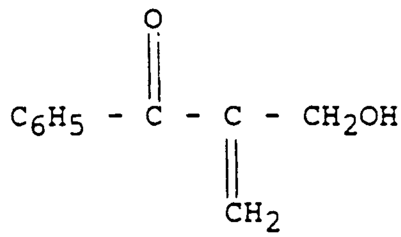

(ii) 2-benzoyl-3-methoxy-1-propene

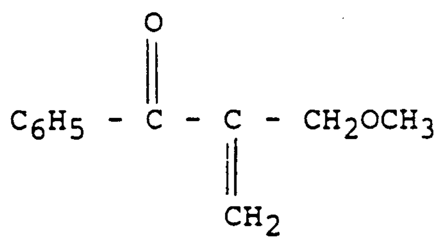

Precursors of alkenylphenones may take a variety of forms. Examples include:

(i) 5-benzoyl-1,3-dioxane

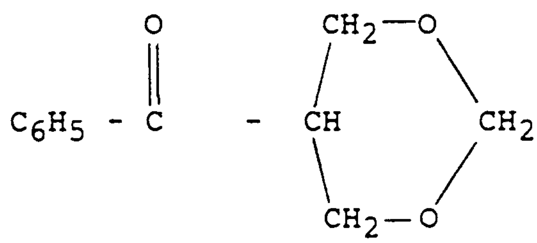

(ii) 2-benzoyl-1,3-dimethoxy-propane

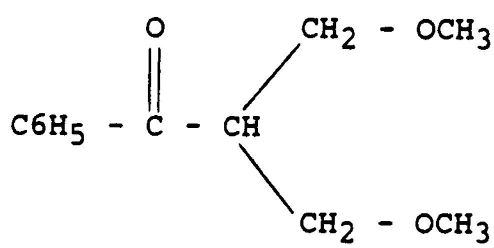

(iii) 3-hydroxy-1-phenyl-1-propanone

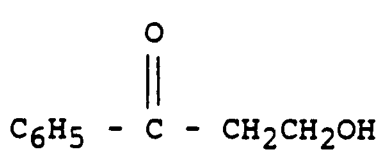

In 15% HCl at 65°C, (i) and (ii) form

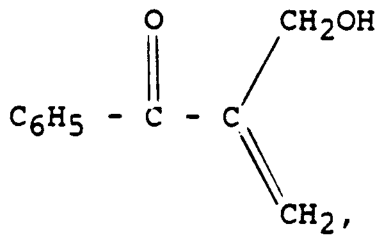

while (iii) forms

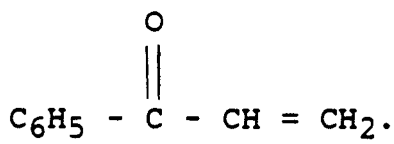

The corrosion inhibitors compositions of the present invention may contain more than one precursor of an alkenylphenone. For example, the corrosion inhibitors of the present invention may include a mixture of precursors, including an alpha-hydroxy vinylidene compound and a hydroxy ketone, preferably together with a surfactant. The alpha-hydroxy vinylidene compound has the form

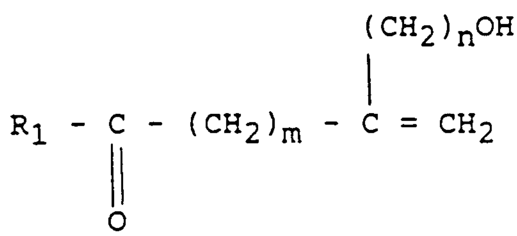

where $R_1$ may be an aryl hydrocarbon or inertly substituted aryl hydrocarbon: m and n must each be less than 5, and the total number of carbons in the compound should be 16 or less. A preferred example of an alpha-hydroxy vinylidene compound is 2-benzoyl-3-hydroxy-1-propene.

The hydroxy ketone has the form

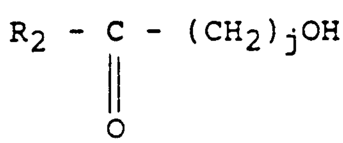

where $R_2$ may be an aryl hydrocarbon or inertly substituted aryl hydrocarbon. The value of j must be less than 5, and the compound should contain no more than 16 carbon atoms. A preferred example of a hydroxy ketone is 3-hydroxy-1-phenyl-1-propanone.

The compositions of the present invention comprise an alkenylphenone of the structure (I) and an N-substituted quinoline (1-azanaphthalene). N-substituted quinolines are usually called quinoliniums. Suitable quinoliniums include quinolinium salts of the structure:

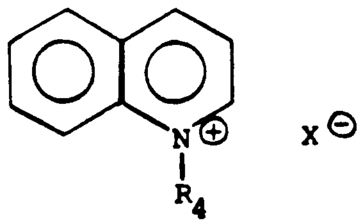

wherein $R_4$ is unsubstituted or inertly substituted alkyl of 4 to 16 carbons, or unsubstituted or inertly substituted alkylaryl of 7 to 20 carbons. Inert substituents are defined as having no adverse effect on the corrosion inhibition of the corresponding unsubstituted N-alkyl or N-alkylaryl quinolinium salts. X may be any compatible anion, preferably a halide such as $Cl^-$ or $Br^-$. A preferred quinolinium salt is 1-(α-naphthylmethyl)-quinolinium chloride.

Quinoline may be replaced by a similar or larger fused-ring system, such as isoquinoline (2-azanaphthalene), acridine (9-azaanthracene), phenanthridine (3,4-benzoquinoline), β-naphthoquinoline (5,6-benzoquinoline), or α-naphthoquinoline (7,8-benzoquinoline).

In addition to an alkenylphenone or a precursor of alkenylphenone, and an N-substituted quinoline which may have surface active properties, the composition may also contain an additional surfactant in an amount from 0 to 2% by weight, based on the weight of the entire composition. The additional surfactant may be chosen from nonionic, cationic, anionic or amphoteric surface active agents. An example of a nonionic surface active agent is "THEO," an adduct of trimethyl-1-heptanol with 7 moles of ethylene oxide. An example of a cationic surface active agent i.s "DDPB," dodecylpyridinium bromide. An example of an anionic surface active agent is disodium 4-decylated oxydibenzenesulfonate. An example of an amphoteric surface active agent is coco beta-amino propionate.

The composition preferably includes an inhibitor aid such as an aliphatic acid or a halide salt, or mixtures thereof. The aliphatic acid of 1 to about 5 carbons may be saturated or unsaturated, for example, propionic acid or propiolic acid. The aliphatic acid may also be unsubstituted or halo-substituted, for example, acetic acid or chloroacetic acid. Mixtures of aliphatic acids may also be used as an inhibitor aid. Iodides are preferred halide salts, for example, KI, NaI, or HI. Mixtures of halide salts may also be used as an inhibitor aid.

Finally, the compositions of the invention include at least one of the following:

(1) Non-oxidizing mineral or organic acids, for example, hydrochloric acid, hydrofluoric acid, sulfuric acid, phosphoric acid, formic acid, acetic acid, citric acid, and mixtures thereof. The acid solutions may optionally contain chelating agents, such as EDTA. The concentration of a non-oxidizing mineral or organic acid in the composition of the present invention may vary from about 0.1 to about 35% by weight, based on the entire weight of the composition.

(2) An alkaline chelating agent, such as the ammonium salts of EDTA, HEDTA and DPTA. Alkaline chelating agents may be present in the composition of the present invention in an amount from about 0.1 to about 15% by weight, based on the weight of the entire composition.

(3) Salt solutions, such as solutions of sodium chloride, potassium chloride, calcium chloride, calcium bromide, zinc bromide, and mixtures thereof. Concentrations of salt solutions in the compositions of the present invention may vary from 0.1% by weight to saturation, based on the weight of the entire composition.

(4) A salt solution, as described above, may be mixed with an acid gas, such as carbon dioxide or hydrogen sulfide, and/or hydrocarbons such as mineral oil, crude oil, or refined hydrocarbon products.

The amount of an alkenylphenone in the composition of the present invention may vary from 0.1% to 2% by weight, based on the weight of the entire composition. The amount of substituted or unsubstituted quinoline in the composition may also vary from 0.1% to 2% by weight, based on the weight of the entire composition. If present, the amount of inhibitor aid in the composition may be up to 10% by weight, based on the weight of the entire composition. The compositions of the present invention may be used for acidizing hydrocarbon-producing agents, cleaning metal, or completing oil and gas wells.

The present invention also includes a process for inhibiting the corrosion of iron and steel caused by corrosive aqueous solutions, especially concentrated hydrochloric acid at temperatures above about 100 °C. The process is performed by introducing an effective corrosion-inhibiting amount of an alkenylphenone or an alkenylphenone precursor and a substituted or unsubstituted quinoline into a corrosive aqueous acid. The aqueous solution may contain hydrochloric acid, hydrofluoric acid, hydrobromic acid, sulfuric acid,

phosphoric acid, ammoniated ethylenediaminetetraacetic acid (EDTA), hydroxyethylethylenediaminetriacetic acid (HEDTA), or various organic acids such as formic, acetic, citric, or mixtures thereof. As discussed above, the alkenylphenone precursor can be selected from any material which generates structure (I) when brought into contact with an aqueous fluid. In many cases, the inhibition of the present process is enhanced by the addition of from 0.01 to 5% by weight, compared to the weight of the entire composition, of a surfactant, selected from the surface active agents discussed above. The process of the present invention is normally practiced from 20 °C to 200 °C, but is especially useful at temperatures above 100 °C. In the process of the present invention, the inhibitor composition is usually 0.1 to 5% by weight compared to the weight of aqueous fluid. The total amount of inhibitor compositions used in the process will depend on the corrosive aqueous acid, its temperature, and the intended time of contact. The ratio of surfactant to inhibitor composition will depend on the corrosive aqueous fluid and the water solubility of the inhibitor composition. The exact amounts are determined using the test methods described in the examples below.

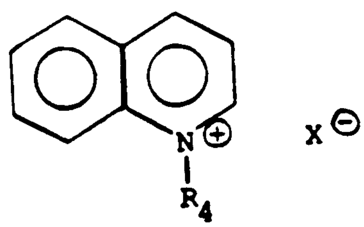

As used hereinafter, the abbreviation "quat" refers to N-substituted quinoliniums and pyridiniums in which the substituted nitrogen atom is pentavalent, as in the compound illustrated above. These compounds are formally analogous to **quaternary** ammonium compounds, from which the abbreviation is derived.

Experiment 1 - Preparation of Quinoliniums:

Quinolinium and pyridinium compounds were prepared by heating equimolar amounts of quinoline or pyridine with a chloro- or bromoalkyl of about 4 to about 10 carbons, or a chloro- or bromoalkylaryl of about 7 to about 20 carbons, to a temperature up to about 125 °C in about 30% aqueous alcohol. The reaction product was analyzed for free halide, and used without further purification.

For example, 50 grams of quinoline (Aldrich, 98%) (0.38 moles) and 68 grams of chloromethylnaphthalene (Aldrich) (0.38 moles) were mixed in 50 ml of isopropyl alcohol and refluxed for 6 hours at 95 °C. The reaction product was analyzed for [$Cl^-$]. For complete reaction the (theoretical) amount of [$Cl^-$] is 8.3 weight percent; the amount of [$Cl^-$] measured is 8.5 weight percent. The concentration of 1-methylnaphthyl-1-azanaphthalene is 70 weight percent.

Example 1

Quinoliniums and pyridiniums made generally as in Experiment 1 were tested with the alkenylphenone described below at 65 °C for 24 hours. A cleaned, weighed J-55 coupon (25 $cm^2$) was hung from a glass hook in a 120 ml jar containing 100 ml HCl and the test inhibitors which were added based on the calculated weight of the quat. In 15% HCl, 0.2 g of alkenylphenone was used with 0.05 g of the quat, while, in 28% HCl, .4 g of alkenylphenone and .1 g of the components were used. The jar was then placed in a water bath set at 65 °C for 24 hours. At the end of the test, the coupons were removed, cleaned in acetone, and reweighed. All corrosion rates are expressed as grams/square centimeter of weight-loss for the time period of the test. Pyridiniums and quinoliniums of similar structure are compared in Tables I and II. Generally, the quinoliniums give better corrosion rates than the comparable pyridinium, especially in 28% HCl.

The alkenylphenone mentioned above, and in the other examples, and referred to as PK in the Tables, is prepared by the following procedure. 180g acetophenone, 90g paraformaldehyde, 300mL methanol and 2.5g $K_2CO_3$ are heated at 95 °C in a stirred Parr bomb for 6 hours. After bringing the pH to 5.0 with a small amount of HCl, the excess methanol is removed using a rotary evaporator. The solution is vacuum distilled at 1-2 Torr, and the fraction removed at 100-140 °C is collected. This fraction consists of a small amount of acetophenone, plus dimethoxybenzoyl propane and methoxy benzoyl propene as major components.

TABLE I

| PYRIDINIUMS WITH ALKENYLPHENONE (PK) 65° C FOR J 55 24 HOURS | | |
|---|---|---|
| PYRIDINIUM | 15° HCl .05/.2 PK | 28% HCl .1/.4 PK |
| | RATE (g/cm$^2$) | |
| C10 Br | .003 | .008 |
| C14 Br | .005 | .008 |
| $CH_2$-NAPTH Cl | .003 | .006 |
| $CH_2$-PH-Cl Cl | .012 | .008 |

TABLE II

| QUINOLINIUMS WITH ALKENYLPHENONE (PK) 65° C FOR J 55 24 HOURS | | |
|---|---|---|
| QUINOLINIUM | 15% HCl .05/.2 PK | 28% HCl .1/.4 PK |
| | RATE (g/cm$^2$) | |
| C10 Br | .003 | .004 |
| C14 Br | .003 | .005 |
| $CH_2$-PH-Cl Cl | .005 | .003 |
| $CH_2$-NAPTH Cl | .003 | .003 |

Example 2.

Tests were conducted in a high pressure autoclave that held 20 120 ml. bottles and was filled with mineral oil to provide hydraulic pressure. One cleaned, weighed N-80 coupon (25 cm$^2$) was hung in the bottle that was filled with 100 ml. of HCl, topped with mineral oil. 1 g. of alkenylphenone and .033 m/L of the quat was also present. At this temperature, KI was used as an inhibitor aid. After the autoclave was closed, it was pressurized to about 316 kg/cm$^2$ (4500 psig) and heated to 120° C, and held at that temperature for 6 hours. The bottles were agitated during the test with a "washing machine" action. After the test, the coupons were removed, cleaned and reweighed as above. The results of the comparisons of pyridiniums and quinoliniums are shown in Tables III and IV. With the exception of the C14 quats, the quinoliniums were superior. The 1-methylnaphthyl-1-azanaphthalene ($CH_2$-NAPTH Cl) was especially effective in 28% HCl.

TABLE III

| PYRIDINIUMS WITH ALKENYLPHENONE (PK) 120° C FOR N 80 6 HOURS 1% PK .003 MOLES PYR | | |
|---|---|---|
| PYRIDINIUM | 15% HCl/1% KI | 28% HCl/2% KI |
| | RATE (g/cm$^2$) | |
| C10 Br | .009 | .021 |
| C14 Br | .011 | .028 |
| $CH_2$-NAPTH Cl | .005 | .019 |
| $CH_2$-PH-Cl Cl | .006 | .012 |

TABLE IV

| QUINOLINIUMS WITH ALKENYLPHENONE (PK) 120 ° C FOR N 80 6 HOURS 1% PK .003 MOLES QUIN | | |
|---|---|---|
| QUINOLINIUM | 15% HCl/1% KI | 28% HCl/2% KI |
| | RATE ($g/cm^2$) | |
| C10 Br | .010 | .024 |
| C14 Br | .020 | .039 |
| $CH_2$PH-Cl Cl | .004 | .012 |
| $CH_2$-NAPTH Cl | .004 | .006 |

EXAMPLE 3.

Similar tests were conducted in HCl at 150 ° C for 6 hours for N-80 steel in the same manner as Example 2. The 1-methylnaphthyl-1-azanaphthalene was compared with 1-methyl-naphthyl-azabenzene, A250 and Corexit 8504-1. Both KI and formic acid were used as aids. Table V demonstrates the superiority of the alkenylphenone and 1-methylnaphthal-1-azanaphthalene combination. The differences are especially significant in 28% HCl.

A 250 is a corrosion inhibitor product of Dowell Schlumberger Inc. of Tulsa, Oklahoma and is fully described in U.S. Patent 4,493,775 by Coffey et al. Corexit 8504-1 is a corrosion inhibitor product of Exxon Chemical Company, a division of Exxon Corporation, of Houston, Texas.

TABLE V

| 150 ° C, 6 HOURS, 15% HCl, N80 | | | |
|---|---|---|---|
| In 1 | In 2 | INHIBITOR AID | RATE, ($g/cm^2$) |
| QNMC [1], 1.0g | PK, .55g | 1.75 KI g | .010 |
| QNMC[1], 1.0g | PK, .55g | 3.5 Formic | .013 |
| PNMC[2], 1.0 | PK, .55 | 1.75 KI | .02 |
| PNMC[2], 1.0 | PK, .55 | 3.5 Formic | .02 |
| A250, 1.5 | - | 1.75 KI | .13 |
| A250, 1.5 | - | 3.5 Formic | .18 |
| C8504-1 1.5 | - | 1.75 KI | .13 |
| C8504-1 1.5 | - | 3.5 Formic | .03 |
| 150 ° C, 6 HOURS, 28% HCl, N80 | | | |
| QNMC, 1.0 | PK, 1.0g | 4.0g KI | .029 |
| QNMC, 1.0g | PK, 1.0g | 8.0 Formic | .03 |
| PNMC, 1.0 | 1.0 | 4.0 KI | .17 |
| PNMC, 1.0 | 1.0 | 8.0 Formic | .16 |
| A250, 1.5 | - | 4.0 KI | .12 |
| A250, 1.5 | - | 8.0 Formic | .29 |
| C8504-1 1.5 | - | 4.0 KI | .06 |
| C8504-1 1.5 | - | 8.0 Formic | .07 |

[1] Quinolinium Napthylmethyl Chloride [1-methylnaphthyl-1-azanaphthalene]
[2] Pyridinium Napthylmethyl Chloride [1-methylnaphthyl-azabenzene]

EXAMPLE 5.

The behavior of alkenylphenone (PK)/1-methylnaphthyl-1-azanaphthalene (QQ) was tested at 149 ° C in HCl for both KI and formic acid. From over 70 individual tests, equations were developed to predict the corrosion rates over a large design space. Table VI shows the predictive equations. The coefficients for the

concentrations of the three components show that the quinolinium is the most important ingredient, but the inhibitor aid and the alkenylphenone also are very important.

TABLE VI

PREDICTIVE EQUATIONS

$$\text{Log (Rate)} = K + a[PK] + b[QQ] + c[AID] + D[HCl]$$

AID = KI

| K | a | b | c | d |
|---|---|---|---|---|
| -1.122 | -.37 | -.74 | -.13 | .06 |
| AID = Formic Acid | | | | |
| -1.43 | -.28 | -.82 | -.19 | .07 |

## Claims

**1.** An acid - corrosion inhibitor composition, characterized in that it comprises :
an alkenylphenone of the structure :

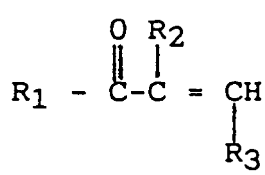

wherein $R_1$ may be unsubstituted or inertly substituted aryl of 6 to 10 carbons, and $R_2$ and $R_3$ may be the same or different and each may be hydrogen, halogen, or an unsubstituted or inertly substituted aliphatic of 3 or more, or $R_2$ is hydroxyalkyl, alkoxyalkyl or an unsubstituted or inertly substituted aryl of 6 or more, provided that the total number of carbons in said alkenylphenone does not exceed 16, and
a substituted 1-azanaphthalene of the structure :

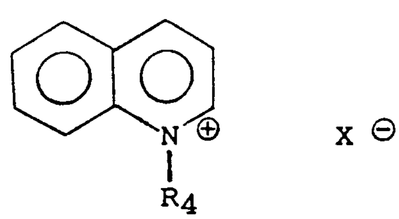

wherein $R_4$ is unsubstituted or inertly substituted alkyl of 4 to 16 carbons, or unsubstituted or inertly substituted alkylaryl of 7 to 20 carbons, and X is chloro or bromo, and an inhibitor aid selected from the group consisting of aliphatic acids of one to five carbons, halide salts, and mixtures thereof.

**2.** The composition set forth in claim 1, wherein $R_1$ is unsubstituted aryl, or $R_1$ is unsubstituted phenyl.

3. The composition set forth in claim 1, wherein $R_3$ is hydrogen.

4. The composition set forth in claim 1, wherein $R_2$ is an alkanol of one to four carbons, or $R_2$ is an ether of two to four carbons.

5. The composition set forth in claim 1, wherein $R_4$ is unsubstituted alkylaryl, or $R_4$ is unsubstituted alkyl, or $R_4$ is 1-methylnaphtyl.

6. The composition set forth in claim 1, wherein said inhibitor aid includes at least one iodide salt.

7. The composition set forth in claim 1, including a surfactant selected from the group consisting of nonionic, cationic, anionic, and amphoteric surface active agents.

8. The composition set forth in any of claims 1 to 7, including an alkaline chelating agent.

9. The composition set forth in any of claims 1 to 7, including a salt solution.

10. The composition set forth in claim 8, including a non-oxidizing mineral acid or organic acid, or an aqueous solution thereof.

11. The composition set forth in claim 10, including an acid gas and a hydrocarbon.

12. A process for inhibiting corrosion of a ferrous surface in the presence of an acid solution, comprising :
contacting said ferrous surface with an aqueous solution containing an effective corrosion inhibiting amount of an alkenylphenone of the structure :

(I) 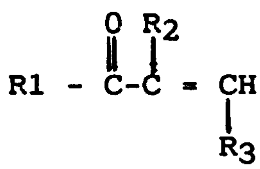

Wherein $R_1$ may be unsubstituted or inertly substituted aryl of 6 to 10 carbons, and $R_2$ and $R_3$ may be the same or different and each may be hydrogen, halogen, or inertly substituted aliphatic of 3 or more, and $R_2$ may also be hydroxyalkyl, alkoxyalkyl, or unsubstituted or inertly substituted aryl of 6 or more, provided that the total number of carbons in said alkenylphenone does not exceed 16, and a substituted 1-azanaphthalene of the structure :

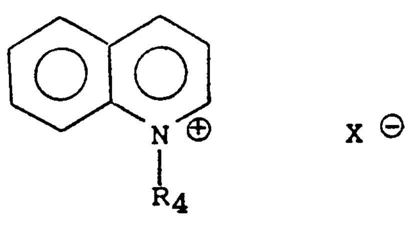

Wherein $R_4$ is unsubstituted or inertly substituted alkyl of 4 to 16 carbons, or unsubstituted or inertly substituted alkylaryl of 7 to 20 carbons, and X is chloro or bromo.

13. The process for inhibiting corrosion set forth in claim 12, wherein said acid solution further contains a surfactant selected from the group consisting of nonionic, cationic, anionic, and amphoteric surface active agents.

14. The process for inhibiting corrosion set forth in claim 12, using a composition as set forth in claims 1 to 11, namely in an oil well.

## Patentansprüche

1. Saure Korrosionsinhibitor-Zusammensetzung, **dadurch gekennzeichnet,** daß sie umfaßt:
ein Alkenylphenon der Struktur:

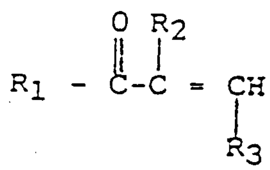

worin $R_1$ unsubstituiertes oder inert substituiertes Aryl mit 6 bis 10 Kohlenstoffatomen sein kann und $R_2$ und $R_3$ gleich oder verschieden und jeweils Wasserstoff, Halogen oder unsubstituiert oder inert substituiert aliphatisch mit 3 oder mehr sein können, oder $R_2$ Hydroxyalkyl, Alkoxyalkyl oder ein unsubstituiertes oder inert substituiertes Aryl mit 6 oder mehr ist, vorausgesetzt, daß die Gesamtzahl von Kohlenstoffatomen in dem Alkenylphenon nicht 16 übersteigt, und
ein substituiertes 1-Azanaphthalin der Struktur:

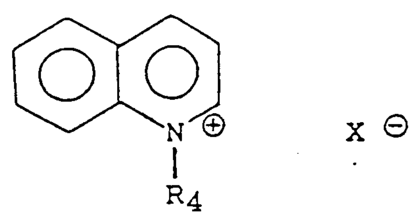

worin $R_4$ unsubstituiertes oder inert substituiertes Alkyl mit 4 bis 16 Kohlenstoffatomen oder unsubstituiertes oder inert substituiertes Alkylaryl mit 7 bis 20 Kohlenstoffatomen ist, und X Chlor oder Brom ist, und ein Inhibitorhilfsmittel, ausgewählt aus der Gruppe, bestehend aus aliphatischen Sauren mit einem bis fünf Kohlenstoffatomen, Halogensalzen und Gemischen davon.

2. Zusammensetzung nach Anspruch 1, worin $R_1$ unsubstituiertes Aryl ist oder $R_1$ unsubstituiertes Phenyl ist.

3. Zusammensetzung nach Anspruch 1, worin $R_3$ Wasserstoff ist.

4. Zusammensetzung nach Anspruch 1, worin $R_2$ ein Alkanol mit einem bis vier Kohlenstoffatomen ist oder $R_2$ ein Ether mit zwei bis vier Kohlenstoffatomen ist.

5. Zusammensetzung nach Anspruch 1, worin $R_4$ unsubstituiertes Alkylaryl ist oder $R_4$ unsubstituiertes Alkyl ist oder $R_4$ 1-Methylnaphthyl ist.

6. Zusammensetzung nach Anspruch 1, worin das Inhibitorhilfsmittel mindestens ein Iodidsalz enthält.

7. Zusammensetzung nach Anspruch 1, umfassend ein oberflächenaktives Mittel, ausgewählt aus der Gruppe, bestehend aus nichtionischen, kationischen, anionischen und amphoteren oberflächenaktiven Mitteln.

8. Zusammensetzung nach einem der Ansprüche 1 bis 7, umfassend einen alkalischen Chelator.

9. Zusammensetzung nach einem der Ansprüche 1 bis 7, umfassend eine Salzlösung.

10. Zusammensetzung nach Anspruch 8, umfassend eine nichtoxidierende Mineralsäure oder organische Säure oder eine wäßrige Lösung davon.

**11.** Zusammensetzung nach Anspruch 10, umfassend ein saures Gas und einen Kohlenwasserstoff.

**12.** Verfahren zum Hemmen der Korrosion einer eisenhaltigen Oberfläche in Gegenwart einer sauren Lösung, umfassend:
Kontaktieren der eisenhaltigen Oberfläche mit einer wäßrigen Lösung, enthaltend eine wirksame korrosionshemmende Menge eines Alkenylphenons der Struktur:

(I) 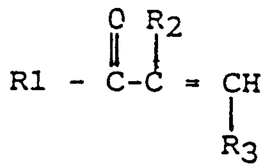

worin $R_1$ unsubstituiertes oder inert substituiertes Aryl mit 6 bis 10 Kohlenstoffatomen sein kann und $R_2$ und $R_3$ gleich oder verschieden und jeweils Wasserstoff, Halogen oder inert substituiert aliphatisch mit 3 oder mehr sein können, und $R_2$ auch Hydroxyalkyl, Alkoxyalkyl oder ein unsubstituiertes oder inert substituiertes Aryl mit 6 oder mehr sein kann, vorausgesetzt, daß die Gesamtzahl von Kohlenstoffatomen in dem Alkenylphenon nicht 16 übersteigt, und
ein substituiertes 1-Azanaphthalin der Struktur:

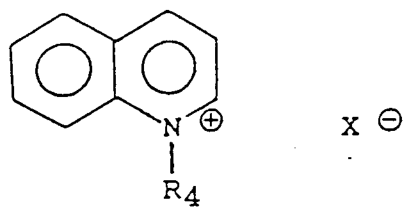

worin $R_4$ unsubstituiertes oder inert substituiertes Alkyl mit 4 bis 16 Kohlenstoffatomen oder unsubstituiertes oder inert substituiertes Alkylaryl mit 7 bis 20 Kohlenstoffatomen ist, und X Chlor oder Brom ist.

**13.** Verfahren zur Korrosionshemmung nach Anspruch 12, worin die saure Lösung weiterhin ein oberflächenaktives Mittel, ausgewählt aus der Gruppe, bestehend aus nichtionischen, kationischen, anionischen und amphoteren oberflächenaktiven Mitteln, enthält.

**14.** Verfahren zur Korrosionshemmung nach Anspruch 12, unter Verwendung einer Zusammensetzung nach einem der Ansprüche 1 bis 11, insbesondere in einer Ölquelle.

## Revendications

**1.** Composition apte à inhiber la corrosion par des acides, composition caractérisée en ce qu'elle contient :

- une alcénylphénone répondant à la formule :

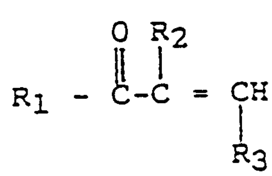

dans laquelle $R_1$ peut représenter un aryle contenant de 6 à 10 atomes de carbone, non substitué ou porteur de substituants inertes, et $R_2$ et $R_3$ peuvent être identiques ou différents et représenter chacun l'hydrogène, un halogène ou un radical aliphatique contenant 3 atomes de carbone ou

davantage, non substitué ou porteur de substituants inertes, ou $R_2$ représente un hydroxy-alkyle, un alcoxy-alkyle ou un radical aryle contenant 6 atomes de carbone ou davantage, non substitué ou porteur de substituants inertes, avec la condition que le nombre total d'atomes de carbone dans ladite alcénylphénone ne dépasse pas 16,

- un 1-aza-naphtalène substitué répondant à la formule :

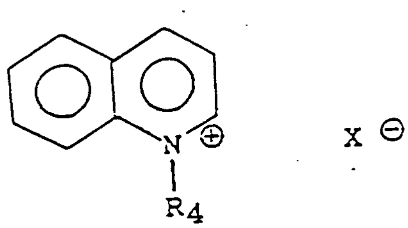

dans laquelle $R_4$ représente un alkyle contenant de 4 à 16 atomes de carbone, non substitué ou porteur de substituants inertes, ou un alkylaryle contenant de 7 à 20 atomes de carbone, non substitué ou porteur de substituants inertes, et X représente le chlore ou le brome, et

- un adjuvant d'inhibiteur pris dans l'ensemble constitué par les acides aliphatiques contenant de 1 à 5 atomes de carbone, les halogénures sels et les mélanges de ceux-ci.

**2.** Composition selon la revendication 1 dans laquelle $R_1$ représente un aryle non substitué ou un phényle non substitué.

**3.** Composition selon la revendication 1 dans laquelle $R_3$ représente l'hydrogène.

**4.** Composition selon la revendication 1 dans laquelle $R_2$ représente un radical d'alcanol contenant de 1 à 4 atomes de carbone ou un radical d'éther contenant de 2 à 4 atomes de carbone.

**5.** Composition selon la revendication 1 dans laquelle $R_4$ représente un alkylaryle non substitué, un alkyle non substitué ou un 1-méthylnaphtyle.

**6.** Composition selon la revendication 1 dans laquelle l'adjuvant d'inhibiteur comprend au moins un iodure sel.

**7.** Composition selon la revendication 1 comprenant un surfactif pris dans l'ensemble constitué par les surfactifs non-ioniques, cationiques, anioniques et amphotères.

**8.** Composition selon l'une quelconque des revendications 1 à 7 qui contient un agent chélatant alcalin.

**9.** Composition selon l'une quelconque des revendications 1 à 7 qui contient une solution saline.

**10.** Composition selon la revendication 8 qui contient un acide minéral ou organique non-oxydant ou une solution aqueuse d'un tel acide.

**11.** Composition selon la revendication 10 qui contient un gaz acide et un hydrocarbure.

**12.** Procédé pour inhiber la corrosion d'une surface ferreuse en présence d'une solution acide, procédé selon lequel on met en contact ladite surface ferreuse avec une solution aqueuse contenant une quantité efficace, en ce qui concerne l'inhibition de la corrosion, d'une alcénylphénone répondant à la formule :

(I) 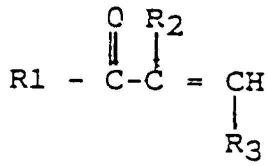 (I)

dans laquelle $R_1$ peut représenter un aryle contenant de 6 à 10 atomes de carbone, non substitué ou porteur de substituants inertes, et $R_2$ et $R_3$ peuvent être identiques ou différents et représenter chacun l'hydrogène, un halogène ou un radical aliphatique contenant 3 atomes de carbone ou davantage, porteur de substituants inertes, et $R_2$ peut également représenter un hydroxy-alkyle, un alcoxy-alkyle ou un radical aryle contenant 6 atomes de carbone ou davantage, non substitué ou porteur de substituants inertes, avec la condition que le nombre total d'atomes de carbone dans ladite alcénylphénone ne dépasse pas 16,
et d'un 1-aza-naphtalène substitué répondant à la formule :

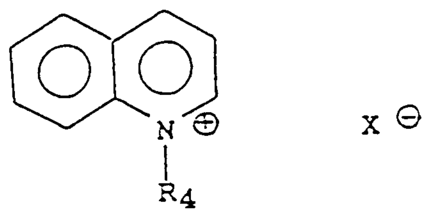

dans laquelle $R_4$ représente un alkyle contenant de 4 à 16 atomes de carbone, non substitué ou porteur de substituants inertes, ou un alkylaryle contenant de 7 à 20 atomes de carbone, non substitué ou porteur de substituants inertes, et X représente le chlore ou le brome

**13.** Procédé pour inhiber la corrosion, selon la revendication 12, dans lequel la solution acide contient en outre un surfactif pris dans l'ensemble constitué par les surfactifs non-ioniques, cationiques, anioniques ou amphotères.

**14.** Procédé pour inhiber la corrosion tel que spécifié à la revendication 12, procédé dans lequel on se sert d'une composition selon les revendications 1 à 11, notamment dans un puits de pétrole.